# EUROPÄISCHE PATENTSCHRIFT

(11) **EP 2 911 964 B1**
(45) Veröffentlichungstag und Bekanntmachung des Hinweises auf die Patenterteilung: **02.11.2016**
(21) Anmeldenummer: 14771264.0
(22) Anmeldetag: 16.09.2014
(51) Int. Cl.: B65G 47/91, B25B 11/00

(54) **VENTIL FÜR UNTERDRUCKHANDHABUNGS- ODER UNTERDRUCKSPANNVORRICHTUNG, SOWIE UNTERDRUCKHANDHABUNGSEINRICHTUNG**
VALVE FOR A VACUUM HANDLING OR VACUUM CLAMPING DEVICE, AND VACUUM HANDLING MEANS
CLAPET POUR DISPOSITIF DE MANIPULATION PAR DÉPRESSION OU DE SERRAGE PAR DÉPRESSION, AINSI QUE MOYEN DE MANIPULATION PAR DÉPRESSION

(30) Priorität: 04.11.2013 DE 102013222378
(43) Veröffentlichungstag der Anmeldung: 02.09.2015
(73) Patentinhaber: J. Schmalz GmbH, 72293 Glatten (DE)
(72) Erfinder: EISELE, Thomas, 72275 Alpirsbach-Peterzell (DE)
(74) Vertreter: DREISS Patentanwälte PartG mbB
(86) Internationale Anmeldenummer: PCT/EP2014/069733
(87) Internationale Veröffentlichungsnummer: WO 2015/062778

(56) Entgegenhaltungen:
- DE-A1- 10 216 220
- DE-A1- 19 814 262
- DE-C- 396 668

## Beschreibung

Die Erfindung betrifft ein Ventil für Unterdruckhandhabungseinrichtungen oder Unterdruckspanneinrichtungen gemäß dem Oberbegriff des Anspruchs 1. Hierbei handelt es sich um Ventile, die bei unbelegter Saugstelle selbsttätig schließen und so eine unerwünschte Leckage von der Ansaugseite zu der Unterdruckversorgungsseite verhindern.

Zur Vermeidung einer unerwünschten Leckage im unbelegten Zustand der Saugstelle sind verschiedene Lösungen bekannt. Beispielsweise zeigt die DE 34 29 444 A1 ein Strömungsventil, bei welchem ein als Kugel ausgebildeter Ventilkörper verlagerbar in einem Strömungskanal angeordnet ist. Wird durch die unbelegte Saugstelle frei angesaugt, so wird die Kugel in dem Strömungskanal aufgrund des Strömungsimpulses gegen einen Dichtsitz mitgerissen und verschließt den Strömungskanal. Aufgrund der Auslösung durch den Strömungsimpuls sind derartige Ventile störungsanfällig bei Strömungsstößen. Auch bei belegter Saugstelle kann bei Beginn eines Ansaugvorgangs aufgrund des anfänglichen Strömungsstoßes in unerwünschter Weise die Schließstellung eingenommen werden.

Andererseits sind Ventile bekannt, bei welchen ein selbsttätiges Schließen bei freiem Ansaugen in unbelegtem Zustand der Ansaugseite nicht aufgrund eines Strömungsimpulses erfolgt, sondern durch eine sich bei freiem Ansaugen einstellende, statische Druckdifferenz eingeleitet wird.

Die DE 198 14 262 C2 zeigt ein Ventil mit den Merkmalen des Oberbegriffs des Anspruchs 1. Der von einem flexiblen Abschnitt des Ventilkörpers begrenzte Steuerraum steht ständig in Verbindung mit der Unterdruckversorgungsseite. Bei Kompression des Steuerraumes wird der flexible Abschnitt derart verformt, dass der Ventilkörper in seine Schließstellung gebracht wird. Gegenüber der Ansaugseite ist der Steuerraum strömungsmäßig vollständig abgeschlossen. Bei Ansaugen im unbelegten Zustand der Ansaugseite stellt sich auf der Ansaugseite kein Unterdruck ein. Dies führt dazu, dass der Steuerraum aufgrund der statischen Druckdifferenz zwischen Steuerraum und Ansaugseite komprimiert wird und der Ventilkörper in seine Schließstellung gebracht wird. Gegenüber den mittels Strömungsimpuls arbeitenden Ventilen bietet dies den Vorteil, dass Störungen durch Strömungsstöße vermieden werden können. Allerdings muss die Zeitskala zum selbsttätigen Schließen und die Empfindlichkeit auf Druckschwankungen an die jeweils mit dem Ventil angesteuerte Unterdruckhandhabungseinrichtung bzw. Unterdruckspanneinrichtung angepasst werden.

Ein anderes Unterdruckventil ist in der DE 102 16 220 A1 beschrieben, wobei der Ventilkörper von einem scheibenartigen Element gebildet ist.

Der Erfindung liegt die Aufgabe zugrunde, eine unerwünschte Leckage zwischen Unterdruckversorgungsseite und Ansaugseite im unbelegten Zustand der Ansaugseite zu vermeiden und dabei eine unerwünschte Empfindlichkeit gegen Strömungsstöße zu vermeiden, sowie eine Anpassung an die Eigenschaften der angesteuerten Unterdruckhandhabungseinrichtung oder Unterdruckspanneinrichtung zu ermöglichen.

Diese Aufgabe wird durch ein Ventil gemäß Anspruch 1, sowie durch eine Sauggreifvorrichtung gemäß Anspruch 9 gelöst. Ausgangspunkt sind selbsttätig schließende Ventile, welche nicht von einem Strömungsimpuls Gebrauch machen, sondern eine sich in unbelegtem Zustand der Ansaugseite einstellende, statische Druckdifferenz zum Schließen ausnutzen. Das Ventil hat einen Ventilgehäuse, welches eine Unterdruckversorgungsseite mit einem Ansauganschluss zur Verbindung mit eine Unterdruckversorgungseinrichtung, sowie eine Ansaugseite zur Verbindung mit einer zu steuernden Unterdruckhandhabungs- oder -Spannvorrichtung. Dabei sind Ansaugseite und Unterdruckversorgungsseite vorzugsweise gegenüberliegend an dem Ventilgehäuse vorgesehen, bzw. das Ventilgehäuse erstreckt sich im Wesentlichen zwischen Ansaugseite und Unterdruckversorgungsseite. In dem Ventilgehäuse ist eine flexible Trennwandung, beispielsweise Membran, vorgesehen, welche einen Steuerraum gegenüber der Ansaugseite in dem Ventilgehäuse abgrenzt. Der Steuerraum kommuniziert mit der Unterdruckversorgungsseite und ist mit ihr strömungsverbunden. An der flexiblen Trennwandung ist ein Ventilkörper angeordnet, welcher zwischen einer Öffnungslage und einer Schließlage bewegbar ist. Der Ventilkörper weist einen Dichtabschnitt auf, der in der Schließlage zur Abdichtung der Unterdruckversorgungsseite gegenüber der Ansaugseite an einem Dichtsitz des Ventils anliegt. Das Ventil ist dabei derart ausgebildet, dass in Abhängigkeit einer Druckdifferenz zwischen Steuerraum und Ansaugseite, insbesondere eines sich in den Steuerraum gegenüber der Ansaugseite einstellenden Unterdrucks, das Volumen des Steuerraums unter Verformung der flexiblen Trennwandung verringert werden kann, wobei dabei der Ventilkörper von der Öffnungslage in die Schließlage bewegt wird. Dadurch wird bei freiem Ansaugen in unbelegtem Zustand der Ansaugseite der Ventilkörper aufgrund eines sich in dem Steuerraum einstellenden statischen Unterdrucks gegenüber der Ansaugseite in die Schließlage bewegt.

Der Ventilkörper weist einen Saugseitendurchgang zur Strömungsverbindung des Steuerraums mit der Ansaugseite auf, derart, dass bei Vorliegen der Öffnungslage der Steuerraum mit der Ansaugseite strömungsverbunden ist. Dabei sind der Dichtsitz und der Dichtabschnitt derart angeordnet, dass in der Schließlage die Strömungsverbindung von der Ansaugseite durch den Saugseitendurchgang dichtend verschlossen ist.

Der Steuerraum ist in Öffnungslage und in Schließlage mit der Unterdruckversorgung verbunden. Dies wirkt auf eine Kompression des Steuerraumes unter Verformung der Trennwandung hin. In der Öffnungslage des Ventilkolbens strömt die an der Ansaugseite angesaugte Luft durch den Saugseitendurchgang in den Steuerraum nach, wobei diese Strömung durch den Saugseitendurchgang naturgemäß begrenzt ist. Ist die Ansaugseite unbelegt (freies Ansaugen), so führt die vergleichsweise große Strömung über den Strömungswiderstand zu einer Druckdifferenz und damit zu einem Unterdruck im Steuerraum gegenüber der Ansaugseite. Erreicht der Unterdruck, d.h. die Druckdifferenz zwischen Saugraum und Ansaugseite, einen vorbestimmten oder vorbestimmbaren Wert, so führt dies zur Kompression des Steuerraums und Verformung der Trennwandung. Der Ventilkolben geht von der Öffnungslage in seine Schließlage über. Dies führt dazu, dass der Dichtabschnitt dichtend an dem zugeordneten Dichtsitz anliegt. Da der Steuerraum weiterhin mit der Unterdruckversorgung in Verbindung steht, wird der Ventilkolben in dieser Schließlage festgesaugt.

Der Ventilkörper wird daher im unbelegten Zustand der Ansaugseite nicht unmittelbar durch den Strömungsimpuls in die Schließlage gebracht, sondern durch eine sich zwischen Steuerraum und Ansaugseite einstellende statische Druckdifferenz. Die Empfindlichkeit des erfindungsgemäßen Ventils durch die Ausgestaltung der flexiblen Trennwandung, die Spannung bzw. Flexibilität der flexiblen Trennwandung, und/oder durch eine Anpassung des Strömungsverhaltens durch den Saugseitendurchgang beeinflusst werde. Das Ventil kann an verschiedene Unterdruckhandhabungs- oder Unterdruckspanneinrichtungen bzw. verschiedene Unterdruckversorgungseinrichtungen angepasst werden.

Die Ansaugseite weist insbesondere wenigstens eine Ansaugöffnung auf, durch welche im Betrieb des Ventils Luft eingesaugt werden kann. Die Ansaugseite und die Unterdruckversorgungsseite können Anschlusselemente umfassen, beispielsweise auf der Ansaugseite ein Sauganschlusselement zur Verbindung mit einem Sauganschluss, beispielsweise eines Sauggreifers, und auf der Unterdruckversorgungsseite ein Versorgungsanschlusselement zum Anschluss an eine Unterdruckversorgungseinrichtung. Denkbar ist auch, dass das Ventilgehäuse von einem Abschnitt eines umfassenden Vorrichtungsgehäuses z.B. einer Unterdruckhandhabungsvorrichtung gebildet ist. In diesem Fall ist die Unterdruckversorgungsseite insbesondere von einem Bereich des Vorrichtungsgehäuses gebildet, welcher mit Unterdruckversorgungskanälen kommuniziert, die an eine Unterdruckversorgungseinrichtung angeschlossen sind.

Zur Vorgabe des Strömungswiderstandes und damit des sich in Abhängigkeit der Saugströmung durch die Ansaugseite einstellenden Unterdrucks im Steuerraum weist der Saugseitendurchgangs insbesondere eine Drosselstelle auf. Die Größe des sich in dem Steuerraum gegenüber der Ansaugseite einstellenden Unterdrucks hängt dann von der Strömung durch die Drosselstelle ab. Über die Drosselstelle kann daher die Ansprechempfindlichkeit des selbstschließenden Ventils angepasst werden. Die Drosselstelle ist vorzugsweise derart einstellbar ausgebildet, dass der Strömungswiderstand vorgebbar ist. Hierzu kann ein Drosselstellglied vorgesehen sein, welches zwischen einer Drossellage, die einem hohen Strömungswiderstand entspricht, und einer Freigabelage, die einem im Vergleich niedrigeren Strömungswiderstand entspricht, bewegbar ist. Dies kann beispielsweise mittels einer Madenschraube realisiert sein, die in einen Drosselkanal einschraubbar ist.

Der Dichtabschnitt und der zugeordnete Dichtsitz sind derart außerhalb des Steuerraums angeordnet, dass in der Schließlage des Ventilkörpers der Saugseitendurchgang selbst gegenüber der Ansaugseite abgedichtet ist. Die Abdichtung erfolgt außerhalb des Saugseitendurchgangs und außerhalb des Steuerraumes, insbesondere an einer äußeren Mündung des Saugseitendurchgangs. In der Schließlage wird somit der abgedichtete Saugseitendurchgang selbst ebenfalls evakuiert. Die genannte Ausgestaltung führt dazu, dass der Dichtabschnitt nicht in dem Steuerraum angeordnet ist und somit der Steuerraum mit einem kleinen Volumen ausgeführt werden kann. Dadurch kann die Ansprechzeit verkürzt und die Ansprechempfindlichkeit des selbstschließenden Ventils erhöht werden.

Der Ventilkörper kann die flexible Trennwandung durchdringen. Vorzugsweise ist dann der Ventilkörper auf der dem Steuerraum zugewandten Seite der Trennwandung als Mündungsabschnitt ausgestaltet. In diesem mündet der Saugseitendurchgang. Auf der anderen Seite der Trennwandung weist der Ventilkörper vorzugsweise einen Führungsabschnitt auf, an welchem der Dichtabschnitt angeordnet ist. Der Führungsabschnitt steht insbesondere kolbenartig oder zapfenartig über die Trennwandung hervor. Der Dichtabschnitt kann dann als ein den Führungsabschnitt umlaufender Vorsprung ausgebildet sein, insbesondere als kragenartiger, ringbundartiger oder tellerartiger Vorsprung.

Die flexible Trennwandung verläuft insbesondere derart, dass auf der dem Steuerraum abgewandten Seite der flexiblen Trennwandung ein Saugseitenraum gebildet ist, welcher mit der Ansaugseite druckverbunden ist, insbesondere in einer Ansaugöffnung der Ansaugseite mündet. Die flexible Trennwandung trennt insbesondere den Saugseitenraum unmittelbar von dem Steuerraum. Der Saugseitenraum ist daher mit dem auf der Ansaugseite herrschenden Druck beaufschlagt. Auf die flexible Trennwandung wirkt also einerseits der sich in dem Steuerraum einstellenden Unterdruck, andererseits der Druck der Ansaugseite. Die Deformation der Trennwand erfolgt in Abhängigkeit der sich zwischen den beiden Räumen einstellenden Druckdifferenz.

Diese Ausgestaltungen ermöglichen eine vorteilhafte Konstruktion von Dichtsitz und Ventilkörper. Insbesondere hat das Ventilgehäuse eine Saugseiteninnenwandung, die den mit der Ansaugseite strömungsverbundenen Saugseitenraum begrenzt. In diesem Saugseitenraum erstreckt sich der Führungsabschnitt entlang einer Längsrichtung, wobei die Saugseiteninnenwandung eine radiale Stufe aufweist, welche den Dichtsitz für den Dichtabschnitt bildet. An der Stufe erhöht sich der Querschnitt des Saugseitenraums bezüglich der Längsrichtung sprungartig. Der Führungsabschnitt ist in dem Saugseitenraum vorzugsweise mit ausreichend Spiel zur Saugseiteninnenwandung geführt, so dass in Öffnungslage eine Strömung von der Ansaugseite durch den Saugseitendurchgang in den Steuerraum möglich ist.

In dem Führungsabschnitt verläuft der Saugseitendurchgang z.B. kanalartig. Er erstreckt sich z.B. entlang einer Längserstreckungsrichtung des Führungsabschnitts von der Trennwandung weg, und mündet in einer zwischen Trennwandung und Dichtabschnitt angeordneten Verbindungsöffnung in dem Saugseitenraum. Die Verbindungsöffnung ist vorzugsweise an einer radialen Begrenzungswandung des Führungsabschnitts angeordnet. Dabei kann die genannte Drosselstelle beispielsweise als radiale Durchgangsbohrung oder radialer Durchgangskanal von dem entlang der Längserstreckung des Führungsabschnitts verlaufenden Längskanal des Saugseitendurchgangs ausgestaltet sein.

Eine vorteilhafte Montage wird dadurch ermöglicht, dass die flexible Trennwandung entlang eines umlaufenden Randes in dem Ventilgehäuse befestigt ist. Die Trennwandung dient insbesondere als Tragemembran für den Ventilkörper. Dieser ist vorzugsweise in dieser flexiblen Trennwandung von dem umlaufenden Rand beabstandet, insbesondere mittig in der flexiblen Trennwandung gehaltert.

Durch die Spannung und/oder die Elastizität der Trennwandung kann eine Vorspannkraft für den Ventilkörper in seiner Öffnungslage gegen eine Bewegung in die Schließlage vorgegeben werden. Dadurch kann die Ansprechempfindlichkeit des selbstschließenden Ventils eingestellt werden, d.h. diejenige Druckdifferenz zwischen Steuerraum und Ansaugseite, ab welcher der Ventilkörper seine Schließlage einnimmt. Denkbar ist auch, dass eine Einstelleinrichtung zur Vorgabe der Vorspannung der flexiblen Trennwandung vorgesehen ist. Es kann auch ein Federmittel vorgesehen sein, welches sich einerseits am Ventilgehäuse, andererseits an dem Ventilkörper abstützt und diesen in seiner Öffnungslage vorspannt.

Das Ventil kann auf einfache Weise montiert werden, wenn das Ventilgehäuse mehrteilig mit einem Oberteil und einem damit verbundenen Unterteil ausgebildet ist, wobei die flexible Trennwandung derart zwischen dem Oberteil und dem Unterteil eingeklemmt ist, dass der Steuerraum sich in dem Oberteil erstreckt und an der Verbindung zum Unterteil von der flexiblen Trennwandung begrenzt ist.

Zur Lösung der eingangs gestellten Aufgabe wird auch die Sauggreifvorrichtung gemäß Anspruch 9 vorgeschlagen, welche einen Saugkörper mit einem Saugraum zur Anlage an ein zu greifendes Werkstück aufweist, wobei dieser Saugraum mit der Ansaugseite eines Ventils der vorstehend beschriebenen Art verbunden ist. Der Saugkörper ist vorzugsweise derart mit dem Ventilkörper verbunden, dass bei Bewegung des Ventilkörpers von der Öffnungslage in die Schließlage der Saugkörper aus einer vorgeschobenen Sauglage in eine zurückgezogene Passivlage bewegt wird. Hierzu kann der Saugkörper mit dem Führungsabschnitt des Ventilkörpers verbunden sein.

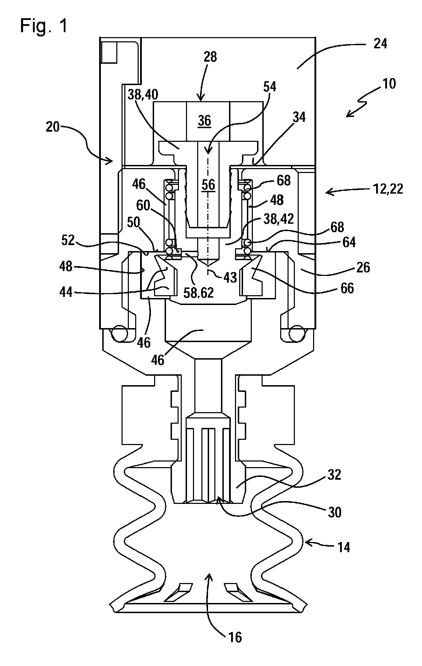

Weitere Einzelheiten und Ausgestaltungen der Erfindung werden im Folgenden unter Bezugnahme auf die Figur näher beschrieben und erläutert. Die Figur 1 zeigt einen Ausschnitt einer Sauggreifvorrichtung 10 in Schnittdarstellung. Die Sauggreifvorrichtung 10 hat ein Vorrichtungsgehäuse 12, an welchem ein Saugkörper 14 derart angeordnet ist, dass er an ein zu greifendes Werkstück angelegt werden kann. Selbstverständlich kann die Sauggreifvorrichtung 10 auch mehrere Saugkörper 14 enthalten, welche an dem Vorrichtungsgehäuse 12 angeordnet sind.

Der Saugkörper 14 begrenzt einen in eine Ansaugrichtung offenen Saugraum 16 zum Ansaugen eines Werkstückes. Dem Saugkörper 14 ist ein erfindungsgemäßes Ventil 20 zur Steuerung der Unterdruckversorgung des Saugraums 16 zugeordnet.

Das Ventil 20 hat ein Ventilgehäuse 22, welches im dargestellten Beispiel von dem in der Figur 1 erkennbaren Teil des Vorrichtungsgehäuses 12 gebildet ist. Das Ventilgehäuse 22 ist mehrteilig aufgebaut mit einem Oberteil 24 und einem mit diesem verbundenen Unterteil 26.

Das Oberteil 24 des Ventilgehäuses 22 weist eine Unterdruckversorgungsseite 28 auf, welche mit einer nicht dargestellten Unterdruckversorgungseinrichtung kommuniziert, so dass die Unterdruckversorgungsseite 28 evakuiert werden kann. Das Unterteil 26 weist an der gegenüberliegenden Seite eine Ansaugseite 30 auf, die mit dem Saugraum 16 des Saugkörpers 14 verbunden ist. Hierzu weist das Ventilgehäuse 22 an der Ansaugseite 30 ein Anschlusselement 32 auf, mit welchem der Saugkörper 14 verbunden werden kann. Beispielsweise ist das Anschlusselement 32 als Anschlussstutzen ausgebildet, auf welchen ein Nippel des Saugkörpers 14 aufgesteckt werden kann.

In dem Ventilgehäuse 22 ist zwischen dem Oberteil 24 und dem Unterteil 26 eine als flexible Membrane ausgebildete flexible Trennwandung 34 eingespannt. Diese begrenzt in dem Oberteil 24 des Ventilgehäuses 22 einen Steuerraum 36, der mit der Unterdruckversorgungsseite 28 verbunden ist.

An der flexiblen Trennwandung 34 ist ein Ventilkörper 38 angeordnet. Dieser durchdringt die flexible Trennwandung 34 und weist einen dem Steuerraum 36 zugewandten Mündungsabschnitt 40, sowie einen sich auf der anderen Seite der flexiblen Trennwandung 34 kolbenartig erstreckenden Führungsabschnitt 42 auf. Dabei erstreckt sich der Führungsabschnitt 42 entlang einer Längsrichtung 43 von der flexiblen Trennwandung 34 weg. Auf seiner der flexiblen Trennwandung 34 abgewandten Seite weist der Ventilkörper 38 außerhalb des Steuerraums 36 einen den Führungsabschnitt 42 radial umlaufenden Dichtabschnitt 44 auf.

Auf der dem Steuerraum 36 abgewandten Seite begrenzt die flexible Trennwandung in dem Ventilgehäuse 22 (hier: in dem Unterteil 26) einen Saugseitenraum 46, welcher mit der Ansaugseite 30 kommuniziert und in dieser ausmündet. Der Saugseitenraum 46 ist lateral zu der Längsrichtung 43 von einer Saugseiteninnenwandung 48 begrenzt. Der Führungsabschnitt 42 ist derart in den so begrenzten Saugseitenraum 46 eingepasst, dass er mit Spiel zu der Saugseiteninnenwandung 48 axial bewegbar ist.

In ihrem Verlauf von der flexiblen Trennwandung 34 weist die Saugseiteninnenwandung 48 eine Stufe 50 auf, an welcher sich der Querschnitt des Saugseiteninnenraums 46 senkrecht zur Längsrichtung 43 sprungartig erhöht. Hierzu ist die Stufe 50 beispielsweise durch eine nach radial außen abknickende Anschlagwandung 52 gebildet. An diese kann, wie nachfolgend noch näher erläutert, der Dichtabschnitt 44 zur Abdichtung anliegen.

Der Ventilkörper 38 ist von einem Saugseitendurchgang 54 durchsetzt, durch welchen (zumindest bei Vorliegen der nachfolgend noch näher erläuterten Öffnungslage des Ventilkörpers 38) der Steuerraum 36 mit dem Saugseitenraum 46 und damit mit der Ansaugseite 30 strömungsverbunden ist. Ausgehend von dem Mündungsabschnitt 40 erstreckt sich der Saugseitendurchgang 54 zunächst als axialer Längskanal 56 in dem Führungsabschnitt 42. In dem von der flexiblen Trennwandung 34 abgewandten Bereich des Führungsabschnitts 42 ist der Längskanal 56 in axialer Richtung (entlang der Längsrichtung 43) abgeschlossen. Eine Radialbohrung 58 durchsetzt den Führungsabschnitt 42 ausgehend von dem Längskanal 56 nach außen und mündet in einer Verbindungsöffnung 60 den Saugseitenraum 46. Durch die Radialbohrung 58 ist eine Drosselstelle 62 vorgegeben. Die Drosselstelle 62 definiert einen Strömungswiderstand für eine Strömung von dem Saugseitenraum 46 durch den Saugseitendurchgang 54 in den Steuerraum 36.

Die Anschlagwandung 52 und die Stufe 50 der Saugseiteninnenwandung 48 bilden beispielhaft einen Dichtsitz 64 für den Dichtabschnitt 44. Wenn der Dichtabschnitt 44 an diesem Dichtsitz 64 anliegt, so ist der Saugseitendurchgang 54 gegenüber der Ansaugseite 30 abgedichtet.

Im dargestellten Beispiel umläuft der Dichtabschnitt 44 den Führungsabschnitt 42 in dem auf die Stufe 50 folgenden Bereich des Saugseitenraumes 46, in welchem dieser einen vergrößerten Querschnitt aufweist. Der Dichtabschnitt 44 ist z.B. ringbundartig ausgebildet und umfasst eine in Richtung zur Anschlagswandung 52 der Stufe 50 hin trichterartig geöffnete Dichtlippe 66.

Der Ventilkörper 38 ist derart an der flexiblen Trennwandung 34 angeordnet, dass er entlang der Längsrichtung 43 axial verschiebbar zwischen einer Öffnungslage und einer Schließlage ist. In der Öffnungslage ist die Dichtlippe 66 des Dichtabschnitts 44 von dem zugeordneten Dichtsitz 64 derart beabstandet, dass durch den Saugseitendurchgang 54 Luft aus dem Saugseitenraum 46 und damit von der Ansaugseite 30 abgesaugt werden kann. In der Schließlage ist der Ventilkörper 38 entlang der Längsrichtung 43 in Richtung des Steuerraumes 36 ausgelenkt, wobei die flexible Trennwandung 34 derart verformt ist, dass sich das Volumen des Steuerraumes 36 verkleinert. Bei der Bewegung in die Schließlage gelangt die Dichtlippe 66 des Dichtabschnitts 44 in dichtende Anlage an den Dichtsitz 64. Dadurch wird die Strömungsverbindung zwischen der Ansaugseite 30 und den Saugseitendurchgang 54 unterbrochen.

In der Figur 1 ist die flexible Trennwandung 34 in ihrer Normallage dargestellt. Die flexible Trennwandung ist vorzugsweise derart vorgespannt, dass eine Auslenkung des Ventilkörpers 38 aus seiner Öffnungslage in die Schließlage nur unter Aufwendung einer Vorspannkraft möglich ist. Um den Ventilkörper 38 in seiner Öffnungslage vorzuspannen, kann auch ein Federmittel 68 (im dargestellten Beispiel eine Spiralfeder) vorgesehen sein, welche sich an einem Wandungsabschnitt des Ventilgehäuses 22 einerseits und an dem Ventilkörper 38 andererseits derart abstützt, dass eine Bewegung des Ventilkörpers 38 von der Öffnungslage in die Schließlage nur entgegen der Federkraft des Federmittels möglich ist. Dadurch wird verhindert, dass der Ventilkörper 38 ungewollt in die Schließlage bewegt wird, z.B. wenn durch die auf den Ventilkörper wirkende Gewichtskraft wenn das Ventil mit der Ansaugseite nach oben betrieben wird. Die Schaltzustände können dadurch stabilisiert werden, insbesondere unabhängig von Lageänderungen des Ventils.

Erfolgt bei zunächst vorliegender Öffnungslage ein Ansaugen bei unbelegter Ansaugseite 30, so stellt sich eine Strömung von der Ansaugseite 30 durch den Saugseitenraum 46 und durch die noch nicht abgedichtete Drosselstelle 62 des Saugseitendurchgangs 54 in den Steuerraum 36 ein. Der Steuerraum 36 wird über die Unterdruckversorgungsseite 28 evakuiert. Aufgrund des durch die Drosselstelle 62 vorgegebenen Strömungswiderstandes ist die Strömung durch den Saugseitendurchgang 54 begrenzt und es kann sich in dem Saugseitenraum 46 kein nennenswerter Unterdruck aufbauen. Folglich bildet sich in dem Steuerraum 36 ein Unterdruck gegenüber dem Saugseitenraum 46 aus. Dies führt dazu, dass die flexible Trennwandung 34 derart verformt wird, dass das Volumen des Steuerraums 36 verkleinert wird. In der Folge wird der Ventilkörper 38 in Richtung seiner Schließlage bewegt, wobei der Dichtabschnitt 44 an dem Dichtsitz 64 zur Anlage gelangt. Sobald dies der Fall ist, ist eine weitere Strömung von der Ansaugseite 30 durch den Saugseitendurchgang 54 in den Steuerraum 36 unterbunden. Folglich wird der Saugseitendurchgang 54 und der von dem Dichtabschnitt 44 gegenüber der Ansaugseite 30 abgedichtete Teilbereich des Saugseitenraumes 46 evakuiert und somit der Ventilkörper 38 in seiner Schließlage festgesaugt. Bei freiem Ansaugen durch eine unbelegte Ansaugseite 30 schaltet das Ventil 20 somit selbsttätig in seine Schließstellung.

## Patentansprüche

1. Ventil (20) für eine Unterdruckhandhabungs- oder Unterdruckspannvorrichtung (10),
- mit einem Ventilgehäuse (22), welches eine Unterdruckversorgungsseite (28) zum Anschluss an eine Unterdruckversorgungseinrichtung und eine Ansaugseite (30) aufweist,
- mit einer flexiblen Trennwandung (34), welche in dem Ventilgehäuse (22) einen Steuerraum (36) abgrenzt, der mit der Unterdruckversorgungsseite (28) kommuniziert,
- mit einem an der flexiblen Trennwandung (34) angeordneten Ventilkörper (38), welcher zwischen einer Öffnungslage und einer Schließlage bewegbar ist, wobei der Ventilkörper (38) einen Dichtabschnitt (44) aufweist, welcher in der Schließlage zur Abdichtung der Unterdruckversorgungsseite (28) gegenüber der Ansaugseite (30) an einen Dichtsitz (64) anliegt,
und wobei in Abhängigkeit eines sich im Steuerraum (36) einstellenden Unterdrucks das Volumen des Steuerraumes (36) unter Verformung der flexiblen Trennwandung (34) verringert wird und dabei der Ventilkörper (38) von der Öffnungslage in die Schließlage bewegt wird, so dass bei freiem Ansaugen in unbelegtem Zustand der Ansaugseite (30) der Ventilkörper (38) aufgrund eines sich im Steuerraum (36) einstellenden Unterdrucks in die Schließlage bewegbar ist, **dadurch gekennzeichnet, dass** der Ventilkörper (38) einen Saugseitendurchgang (54) zur Strömungsverbindung des Steuerraums (36) mit der Ansaugseite (30) aufweist, wobei der Dichtabschnitt (44) und der Dichtsitz (64) derart außerhalb des Steuerraumes (36) angeordnet sind, dass in der Schließlage der Saugseitendurchgang (54) gegenüber der Ansaugseite (30) abgedichtet ist und die Strömungsverbindung von der Ansaugseite durch den Saugseitendurchgang (54) dichtend verschlossen ist,
wobei der Saugseitendurchgang (54) eine Drosselstelle (62) aufweist, welche einen Strömungswiderstand für die Saugströmung von der Ansaugseite (30) in den Steuerraum (36) derart definiert, dass sich beim Einsaugen von Luft ein Unterdruck zwischen Ansaugseite (30) und Steuerraum (36) ausbildet.

2. Ventil (20) nach einem der vorherigen Ansprüche, **dadurch gekennzeichnet, dass** der Ventilkörper (38) die flexible Trennwandung (34) durchdringt, wobei der Ventilkörper (38) auf der dem Steuerraum (36) zugewandten Seite der flexiblen Trennwandung (34) einen Mündungsabschnitt (40) und auf der anderen Seite der flexiblen Trennwandung (34) einen Führungsabschnitt (42) aufweist, wobei der Saugseitendurchgang (54) in dem Mündungsabschnitt (40) mündet und der Dichtabschnitt (44) an dem Führungsabschnitt (42) angeordnet ist.

3. Ventil (20) nach dem vorherigen Anspruch, **dadurch gekennzeichnet, dass** der Führungsabschnitt (42) kolbenartig über die flexible Trennwandung (34) hervorstehend ausgebildet ist und der Dichtabschnitt (44) als ein den Führungsabschnitt (42) umlaufender Vorsprung ausgebildet ist.

4. Ventil (20) nach dem Anspruch 2 oder 3, **dadurch gekennzeichnet, dass** das Ventilgehäuse (22) mit einer Saugseiteninnenwandung (48) einen mit der Ansaugseite (30) strömungsverbundenen Saugseitenraum (46) begrenzt, in welchen sich der Führungsabschnitt (42) entlang einer Längsrichtung (43) erstreckt, wobei die Saugseiteninnenwandung (48) eine Stufe (50, 52) aufweist, welche den Dichtsitz (62) für den Dichtabschnitt bildet.

5. Ventil (20) nach wenigstens dem Anspruch 2, **dadurch gekennzeichnet, dass** der Saugseitendurchgang (54) kanalartig, insbesondere entlang einer Längserstreckungsrichtung (43) des Führungsabschnitts (42) von der flexiblen Trennwandung (34) weg, in dem Führungsabschnitt (42) verläuft und in einer zwischen der flexiblen Trennwandung (34) und dem Dichtabschnitt (44) angeordneten Verbindungsöffnung (60) mündet.

6. Ventil (20) nach einem der vorherigen Ansprüche, **dadurch gekennzeichnet, dass** die flexible Trennwandung (34) entlang eines umlaufenden Randes in dem Ventilgehäuse (22) befestigt ist.

7. Ventil (20) nach einem der vorherigen Ansprüche, **dadurch gekennzeichnet, dass** die flexible Trennwandung (34) derart gespannt ist, dass der Ventilkörper (38) in der Öffnungslage gegen eine Bewegung in die Schließlage vorgespannt ist.

8. Ventil (20) nach einem der vorherigen Ansprüche, **dadurch gekennzeichnet, dass** das Ventilgehäuse (22) mehrteilig mit einem Oberteil (24) und einem damit verbundenen Unterteil (26) ausgebildet ist, wobei die flexible Trennwandung (34) derart zwischen dem Oberteil (24) und dem Unterteil (26) eingeklemmt ist, dass der Steuerraum (36) sich in dem Oberteil (24) erstreckt und an der Verbindung zum Unterteil (26) von der flexiblen Trennwandung (34) begrenzt ist.

9. Sauggreifvorrichtung (10) mit einem Saugkörper (14), welcher einen Saugraum (16) zur Anlage an ein zu greifendes Werkstück aufweist, und mit einem Ventil (20) nach einem der Ansprüche 1 - 8, wobei der Saugraum (16) mit der Ansaugseite (30) des Ventils (20) verbunden ist.

10. Sauggreifvorrichtung nach Anspruch 9, **dadurch gekennzeichnet, dass** der Saugkörper (14) derart mit dem Ventilkörper (38) verbunden ist, dass bei Bewegung des Ventilkörpers (38) von der Öffnungslage in die Schließlage der Saugkörper (14) von einer vorgeschobenen Sauglage in eine zurückgezogene Passivlage bewegt wird.

## Claims

1. A valve (20) for a vacuum handling or vacuum clamping device (10),
- having a valve housing (22), which has a vacuum supply side (28) for connecting to a vacuum supply device, and a suction side (30),
- having a flexible dividing wall (34), which delimits a control chamber (36) in the valve housing (22), which control chamber (36) communicates with the vacuum supply side,
- having a valve body (38) disposed at the flexible dividing wall (34), which valve body (38) can be moved between an open position and a closed position, wherein the valve body (38) has a sealing section (44), which bears against a seal seat (64) when in the closed position, in order to seal the vacuum supply side (28) against the suction side (30), and wherein the volume of the control chamber (36) is reduced through deformation of the flexible dividing wall (34), depending on a vacuum occurring in the control chamber (36), and wherein the valve body (38) is moved thereby from the open position to the closed position, such that when suction occurs in an unoccupied state of the suction side (30), the valve body (38) is moved from the open position to the closed position due to a vacuum occurring in the control chamber (36), **characterized in that** the valve body (38) has a suction side passage (54) for a flow connection of the control chamber (36) to the suction side (30), wherein the sealing section (44) and the seal seat (64) are disposed outside the control chamber (36) such that, when in the closed position, the suction side passage (54) is sealed against the suction side (30) and the flow connection from the suction side through the suction side passage (54) is closed in a sealed manner,
wherein the suction side passage (54) has a choke part (62), which defines a flow resistance for the suction flow from the suction side (30) into the control chamber (36) such that, when air is suctioned in, a vacuum is formed between the suction side (30) and the control chamber (36).

2. The valve (20) according to one of the preceding Claims, **characterized in that** the valve body (38) passes through the flexible dividing wall (34), wherein the valve body (38) has an outlet section (40) on the side of the flexible dividing wall (34) facing the control chamber (36), and a guide section (42) on the other side of the flexible dividing wall (34), wherein the suction side passage (54) opens into the outlet section (40), and the sealing section (44) is disposed on the guide section (42).

3. The valve (20) according to the preceding Claim, **characterized in that** the guide section (42) is designed in the manner of a piston protruding over the flexible dividing wall (34), and the sealing section (44) is designed as a projection encompassing the guide section (42).

4. The valve (20) according to Claim 2 or 3, **characterized in that** the valve housing (22), with a suction side internal wall, delimits a suction side chamber (46) that has a flow connection to the suction side (30), in which the guide section (42) extends along a longitudinal direction (43), wherein the suction side internal wall (48) has a step (50, 52), which forms the seal seat (62) for the sealing section.

5. The valve (20) according to at least Claim 2, **characterized in that** the suction side passage (54) runs in the manner of a channel, in particular along a longitudinal extension direction (43) of the guide section (42), away from the flexible dividing wall (34), in the guide section (42), and opens into a connecting opening (60) disposed between the flexible dividing wall (34) and the sealing section (44).

6. The valve (20) according to one of the preceding Claims, **characterized in that** the flexible dividing wall (34) is secured in the valve housing (22) along an encompassing edge.

7. The valve according to one of the preceding Claims, **characterized in that** the flexible dividing wall (34) is tensioned such that the valve body (38) is pretensioned in the open position against a movement into the closed position.

8. The valve (20) according to one of the preceding Claims, **characterized in that** the valve housing (22) has a multipart design, having an upper part (24), and a lower part (26) connected thereto, wherein the flexible dividing wall (34) is clamped between the upper part (24) and the lower part (26) such that the control chamber (36) extends in the upper part (24) and is delimited by the flexible dividing wall (34) at the connection to the lower part (26).

9. A vacuum gripping device (10) having a suction body (14), which has a suction chamber (16) that is to be placed on a workpiece that is to be picked up, and having a valve (20) according to one of the claims 1 - 8, wherein the suction chamber (16) is connected to the suction side (30) of the valve (20).

10. The vacuum gripping device (10) according to claim 10, **characterized in that** the suction body (14) is connected to the valve body (38) such that when the valve body (38) is moved from the open position to the closed position, the suction body (14) is moved from an advanced suction position to a retracted passive position.

## Revendications

1. Clapet (20) pour un dispositif de manipulation par dépression ou de serrage par dépression (10), comprenant
- un boîtier de clapet (22) qui présente un côté d'alimentation en dépression (28) destiné à être raccordé à un dispositif d'alimentation en dépression ainsi qu'un côté d'aspiration (30),
- une paroi de séparation (34) flexible qui délimite, dans le boîtier de clapet (22), un espace de commande (36) qui communique avec le côté d'alimentation en dépression (28),
- un corps de clapet (38) qui est disposé sur la paroi de séparation (34) flexible et qui est déplaçable entre une position d'ouverture et une position de fermeture, ledit corps de clapet (38) présentant une portion d'étanchéité (44) qui, dans la position de fermeture, vient s'appuyer sur un siège d'étanchéité (64) afin d'étancher le côté d'alimentation en dépression (28) par rapport au côté d'aspiration (30),
et dans lequel, en fonction d'une dépression s'établissant à l'intérieur de l'espace de commande (36), le volume de l'espace de commande (36) est réduit en déformant la paroi de séparation (34) flexible et, ce faisant, le corps de clapet (38) est déplacé de la position d'ouverture dans la position de fermeture, de sorte que, dans le cas d'une aspiration libre à l'état libre du côté d'aspiration (30), le corps de clapet (38) peut être déplacé dans la position de fermeture en raison d'une dépression s'établissant à l'intérieur de l'espace de commande (36),
**caractérisé par le fait que** le corps de clapet (38) présente un passage côté aspiration (54) destiné à la communication fluidique entre l'espace de commande (36) et le côté d'aspiration (30), dans lequel ladite portion d'étanchéité (44) et le siège d'étanchéité (64) sont disposés à l'extérieur de l'espace de commande (36) de telle sorte que, dans la position de fermeture, le passage côté aspiration (54) est étanché par rapport au côté d'aspiration (30) et que la communication fluidique depuis le côté d'aspiration est fermée de manière étanché par le passage côté aspiration (54),
dans lequel le passage côté aspiration (54) présente un point d'étranglement (62) qui définit une résistance à l'écoulement pour le courant d'aspiration depuis le côté d'aspiration (30) dans l'espace de commande (36) de telle manière que, lors de l'aspiration d'air, une dépression s'établit entre le côté d'aspiration (30) et l'espace de commande (36).

2. Clapet (20) selon la revendication précédente, **caractérisé par le fait que** le corps de clapet (38) pénètre la paroi de séparation (34) flexible, dans lequel le corps de clapet (38) présente une portion de bouche (40) du côté de la paroi de séparation (34) flexible qui montre vers l'espace de commande (36), et une portion de guidage (42) de l'autre côté de la paroi de séparation (34) flexible, dans lequel le passage côté aspiration (54) débouche dans la portion de bouche (40) et la portion d'étanchéité (44) est disposée sur la portion de guidage (42).

3. Clapet (20) selon la revendication précédente, **caractérisé par le fait que** la portion de guidage (42) est réalisée de façon à dépasser à la manière d'un piston ladite paroi de séparation (34) flexible, et que la portion d'étanchéité (44) est réalisée en tant que projection s'étendant autour de la portion de guidage (42).

4. Clapet (20) selon la revendication 2 ou 3, **caractérisé par le fait que** le boîtier de clapet (22) délimite avec une paroi intérieure côté aspiration (48) un espace côté aspiration (46) qui est en communication fluidique avec le côté d'aspiration (30) et dans lequel ladite portion de guidage (42) s'étend suivant une direction longitudinale (43), la paroi intérieure côté aspiration (48) présentant un gradin (50, 52) qui forme le siège d'étanchéité (62) pour la portion d'étanchéité.

5. Clapet (20) selon la revendication 2 au moins, **caractérisé par le fait que** le passage côté aspiration (54) s'étend à l'intérieur de la portion de guidage (42) à la manière d'un canal, en particulier suivant une direction d'extension longitudinale (43) de la portion de guidage (42) opposée à la paroi de séparation (34) flexible, et débouche dans une ouverture de communication (60) disposée entre la paroi de séparation (34) flexible et la portion d'étanchéité (44).

6. Clapet (20) selon l'une quelconque des revendications précédentes, **caractérisé par le fait que** la paroi de séparation (34) flexible est fixée suivant un bord périphérique dans le boîtier de clapet (22).

7. Clapet (20) selon l'une quelconque des revendications précédentes, **caractérisé par le fait que** la paroi de séparation (34) flexible est tendue de telle sorte que, dans la position d'ouverture, le corps de clapet (38) est précontraint contre un mouvement dans la position de fermeture.

8. Clapet (20) selon l'une quelconque des revendications précédentes, **caractérisé par le fait que** le boîtier de clapet (22) est réalisé en plusieurs parties comprenant une partie supérieure (24) et une partie inférieure (26) reliée à celle-ci, ladite paroi de séparation (34) flexible étant coincée entre la partie supérieure (24) et la partie inférieure (26) de telle manière que l'espace de commande (36) s'étend dans la partie supérieure (24) et est délimité par la paroi de séparation (34) flexible sur la jonction vers la partie inférieure (26).

9. Dispositif de préhension par aspiration (10) comprenant un corps d'aspiration (14) qui présente un espace d'aspiration (16) pour venir en appui sur une pièce à saisir, et un clapet (20) selon l'une quelconque des revendications 1 à 8, ledit espace d'aspiration (16) étant relié au côté d'aspiration (30) du clapet (20).

10. Dispositif de préhension par aspiration selon la revendication 9, **caractérisé par le fait que** le corps d'aspiration (14) est relié au corps de clapet (38) de telle manière que, lorsque le corps de clapet (38) est déplacé de la position d'ouverture dans la position de fermeture, ledit corps d'aspiration (14) est déplacé d'une position d'aspiration avancée dans une position passive rétractée.
